# FASCICULE DE BREVET EUROPEEN

(11) **EP 3 002 138 B1**
(45) Date de publication et mention de la délivrance du brevet: **31.07.2019**
(21) Numéro de dépôt: 15185875.0
(22) Date de dépôt: 18.09.2015
(51) Int. Cl.: B60G 15/06, F16C 19/10

(54) **BUTÉE DE SUSPENSION À COUPELLE MONOBLOC MULTIFONCTION**
ANSCHLAGPUFFER MIT MULTIFUNKTIONS-MONOBLOCKSCHALE
BUMP STOP WITH MULTIFUNCTIONAL INTEGRAL CUP

(30) Priorité: 02.10.2014 FR 1459438
(43) Date de publication de la demande: 06.04.2016
(73) Titulaire: NTN-SNR Roulements, 74000 Annecy (FR)
(72) Inventeur: BUYS, Sebastien, 74150 VALLIERES (FR); DELARCHE, Sébastien, 74320 SEVRIER (FR)
(74) Mandataire: Alatis

(56) Documents cités:
- WO-A1-2012/028177
- DE-A1- 2 261 347
- FR-A1- 2 961 747
- US-A1- 2009 315 292
- US-A1- 2011 311 177
- US-A1- 2013 207 365

## Description

### DOMAINE TECHNIQUE DE L'INVENTION

L'invention se rapporte à une butée de suspension pour une jambe de force comportant un amortisseur télescopique et un ressort à boudin. L'invention se rapporte également à une jambe de suspension comportant une telle butée.

### ÉTAT DE LA TECHNIQUE ANTÉRIEURE

On connaît des jambes de suspension comportant un ressort à boudin, un amortisseur télescopique situé à l'intérieur du ressort à boudin, un tampon de choc servant de butée de fin de course d'amortissement de l'amortisseur télescopique et une butée de suspension tournante, comportant un palier à roulement dont le diamètre est sensiblement inférieur à celui du ressort à boudin et dont la rondelle inférieure est solidaire de l'amortisseur télescopique. Une jambe de suspension de ce type est illustrée par exemple dans le document FR 2 712 847. On prévoit alors une coupelle métallique avec trois zones d'appui annulaires sensiblement concentriques, à savoir, radialement de l'extérieur vers l'intérieur, une zone d'appui pour le ressort à boudin, une zone d'appui pour le tampon de choc et une zone d'appui pour un épaulement de l'amortisseur télescopique. Cette rondelle est elle-même en appui sur une rondelle intermédiaire constituant un siège pour la rondelle inférieure du palier à roulement. Un tel dispositif se prête mal à un assemblage par sous-ensembles et nécessite la gestion de nombreuses pièces. Sa masse est par ailleurs importantes du fait des multiples pièces métalliques empilées.

Une autre jambe de suspension de ce type est illustrée dans le document EP 2 165 864, qui suggère d'interposer entre la rondelle inférieure du palier à roulement d'une part, et les éléments de suspension constitués par le ressort à boudin, le tampon de choc et la tête de l'amortisseur d'autre part, une pièce en matière plastique monobloc comportant trois zones d'appui annulaires concentriques pour les trois éléments de suspension. La pièce présente en coupe longitudinale une section en T. La structure de la jambe de suspension est allégée par rapport à la précédente, mais au prix de la robustesse, car la pièce monobloc en matière plastique peut rapidement se fatiguer sous les sollicitations continues de la tête d'amortisseur.

Il a également été proposé, dans le document DE 226 13 47, de réunir dans une seule pièce métallique les fonctions de rondelle inférieure de palier et d'appui pour les éléments de suspension, à savoir dans le cas considéré, un ressort à boudin et une tête d'amortisseur. L'intégration est ici maximale, mais la pièce métallique unique est d'un coût élevée de fabrication, notamment du fait de sa taille et de sa forme qui ne facilitent pas la finition du chemin de roulement. En fonctionnement, les déformations induites par le travail des éléments de suspension se transmettent au chemin de roulement qui gauchit, ce qui n'est pas souhaitable.

Dans le document US2009315292 est décrite une butée de suspension pour une jambe de suspension comportant un amortisseur télescopique et un ressort à boudin. La rotation de la butée de suspension et la transmission des efforts dans l'axe de rotation sont assurés par un palier à roulement comportant une rondelle supérieure et une rondelle inférieure tournant l'une par rapport à l'autre, la rondelle inférieure s'étendant radialement vers l'intérieur par rapport à la rondelle supérieure. La butée comporte une coupelle métallique monobloc présentant une face supérieure comportant une zone de contact avec la rondelle inférieure du roulement et une face inférieure comportant un épaulement annulaire plan extérieur et une portée annulaire au moins partiellement cylindrique tournée radialement vers l'extérieur délimitant avec l'épaulement extérieur une zone annulaire périphérique d'appui pour l'extrémité supérieure du ressort à boudin. La coupelle métallique monobloc comporte en outre une portée annulaire plane d'appui direct pour la tige de l'amortisseur télescopique. Cette portée annulaire plane d'appui s'interpose entre la tige d'amortisseur et la rondelle inférieure. Cette architecture est relativement massive, au sens ou la coupelle monobloc est métallique. La coupelle métallique ne peut pas être préassemblée sur le palier à roulement avant la mise en place sur le véhicule. De plus, la configuration de la coupelle métallique ne permet pas de définir un logement pour un tampon de choc.

### EXPOSÉ DE L'INVENTION

L'invention vise à remédier aux inconvénients de l'état de la technique et à proposer un assemblage simplifié pour une butée de suspension dont la rondelle inférieure tournante assure également un appui pour un amortisseur télescopique.

Pour ce faire est proposée, suivant un premier aspect de l'invention, une butée de suspension pour une jambe de suspension comportant un amortisseur télescopique et un ressort à boudin. La rotation de la butée de suspension et la transmission des efforts dans l'axe de rotation sont assurés par un palier comportant au moins une rondelle supérieure et une rondelle inférieure tournant l'une par rapport à l'autre, la rondelle inférieure formant une portée annulaire plane inférieure d'appui pour l'amortisseur télescopique. La butée comporte en outre une coupelle monobloc présentant une face supérieure comportant une zone de contact avec la rondelle inférieure du roulement et une face inférieure comportant un épaulement annulaire plan extérieur et une portée annulaire au moins partiellement cylindrique tournée radialement vers l'extérieur délimitant avec l'épaulement extérieur une zone annulaire périphérique d'appui pour l'extrémité supérieure du ressort à boudin, la portée annulaire plane inférieure d'appui de la rondelle inférieure s'étendant radialement vers l'intérieur par rapport à la coupelle monobloc. La rondelle inférieure a ainsi un diamètre intérieur inférieur au diamètre intérieur de la coupelle, ce qui permet un appui de la tige d'amortisseur sur la portée annulaire plane inférieure sans contact avec la coupelle.

La coupelle monobloc, de préférence réalisée en matière moulable, notamment en matière plastique ou en un matériau composite avec ou sans insert de renfort, constitue à elle seule l'interface entre la rondelle inférieure du roulement et le ressort à boudin. La rondelle inférieure, pour assurer sa fonction d'appui pour l'amortisseur télescopique, est nécessairement rigide, et de préférence en métal, et peut être réalisée par exemple par emboutissage. La rondelle supérieure est de préférence également métallique.

La face inférieure de la coupelle monobloc comporte en outre une zone de logement d'une extrémité supérieure d'un tampon de choc, délimitée axialement par un épaulement annulaire plan intérieur.

De préférence, la face supérieure de la coupelle monobloc comporte des nervures de renfort situées radialement à l'extérieur de la zone de contact. Ces nervures sont destinées à assurer une rigidité en flexion à la coupelle, tout en limitant sa masse. De préférence, certaines au moins des nervures sont radiales. Les nervures permettent de transférer radialement les efforts entre rondelle inférieure et ressort à boudin, tout en limitant le niveau de contraintes dans la coupelle. Suivant un mode de réalisation, certaines au moins des nervures délimitent des alvéoles polygonales. On gère ainsi plusieurs modes de déformation.

La zone de contact peut également comporter des nervures sur lesquelles repose la rondelle inférieure.

Suivant un mode de réalisation la rondelle inférieure a un diamètre extérieur inférieur à un diamètre intérieur de la zone annulaire périphérique d'appui de l'extrémité supérieure du ressort à boudin.

La zone de logement d'une extrémité supérieure d'un tampon de choc, peut avantageusement être délimitée radialement par par une face de confinement au moins partiellement cylindrique tournée radialement vers l'intérieur, la face de confinement étant le cas échéant située radialement à l'intérieur de la portée annulaire. De préférence, la zone de contact est située radialement à l'intérieur de la face de confinement. Suivant un mode de réalisation particulièrement avantageux la coupelle monobloc présente une cloison formant un pli annulaire constituant la face de confinement et la portée annulaire.

Préférentiellement, la coupelle monobloc présente des orifices d'évacuation pour évacuer l'eau qui pourrait s'accumuler sur la face supérieure.

On peut prévoir en outre un couvercle en appui sur la rondelle supérieure. Ce couvercle peut présenter une jupe périphérique formant avec un relief périphérique de la face supérieure de la coupelle monobloc un joint labyrinthe. Le couvercle peut avantageusement être encliqueté sur la coupelle monobloc, la jupe périphérique et le relief périphérique pouvant présenter à cet effet des zones d'encliquetage mutuel, ce qui permet de former un sous-ensemble cohérent entre le roulement et la coupelle, avant son montage sur le véhicule.

De préférence, la coupelle monobloc est moulée, de préférence par injection dans un moule à mouvement purement axial. En d'autres termes, les formes sont choisies de façon à éviter un moule à tiroirs latéraux, afin d'augmenter les cadences de fabrication et de limiter la complexité et les coûts.

Les rondelles supérieure et inférieure du palier ont des zones de transmission d'efforts annulaires qui se font face. Ces zones de transmission d'effort sont de préférence situées radialement à l'extérieur de la portée annulaire.

La portée annulaire plane inférieure d'appui s'étend de préférence radialement vers l'intérieur par rapport à la rondelle supérieure. La rondelle d'appui présente en outre de préférence une portée annulaire plane supérieure opposée à la portée annulaire plane inférieure d'appui. On peut ainsi fixer la tige de l'amortisseur, par exemple en vissant à l'extrémité de la tige d'amortisseur un écrou venant directement ou indirectement en appui contre la portée annulaire plane supérieure, alors que la portée annulaire plane inférieure d'appui est en appui contre un épaulement de la tige de l'amortisseur.

Suivant un mode de réalisation, le palier est un palier à roulement, comportant des corps roulants en contact avec des chemins de roulement formés sur les rondelles supérieure et inférieure. Alternativement, le palier peut être un palier lisse, avec ou sans interposition d'une rondelle de friction entre la rondelle supérieure et la rondelle inférieure.

Suivant un autre aspect de l'invention, celle-ci a trait à une jambe de suspension comportant une butée de suspension telle que décrite précédemment, un amortisseur télescopique sans contact avec la coupelle monobloc, en appui contre la portée annulaire plane inférieure d'appui formée par la rondelle inférieure et un ressort à boudin entourant l'amortisseur télescopique et présentant une extrémité supérieure en appui contre la zone d'appui. La jambe comporte en outre un tampon de choc servant de butée de fin de course d'amortissement de l'amortisseur et présentant une extrémité supérieure logée dans la zone de logement.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'une jambe de suspension et d'une butée de suspension suivant un premier mode de réalisation de l'invention;
- la figure 2, une vue en perspective d'une coupelle de la butée de la figure 1;

Pour plus de clarté, les éléments identiques sont repérés par des signes de référence identiques sur l'ensemble des figures.

### DESCRIPTION DÉTAILLÉE D'UN MODE DE RÉALISATION

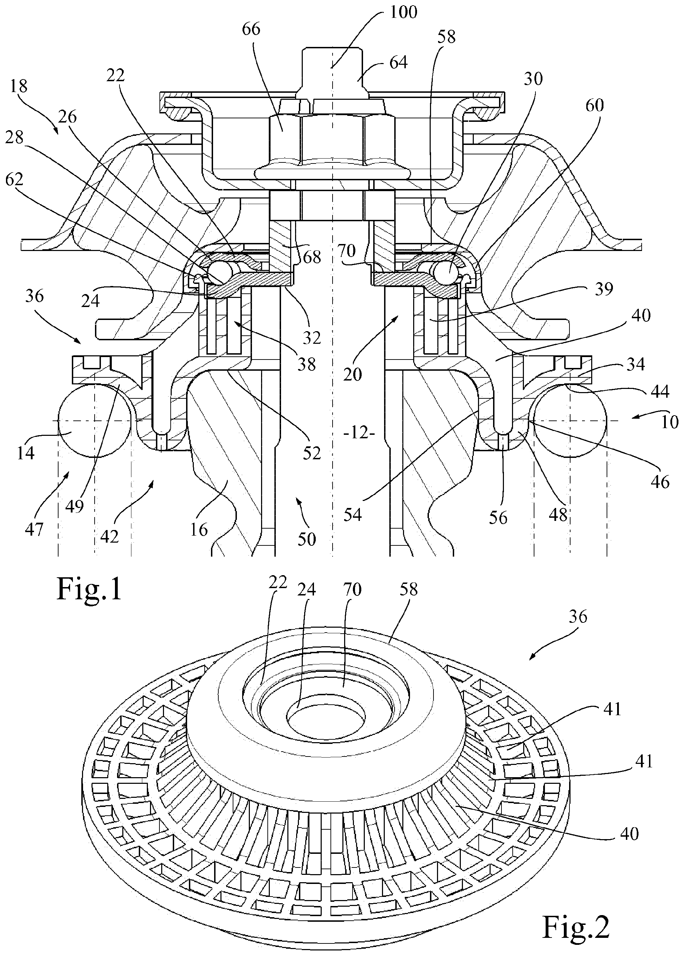

En référence aux figures 1 et 2, une jambe de suspension 10 est composée, dans sa partie supérieure, d'une tige d'amortisseur télescopique 12, d'un ressort à boudin 14, d'un tampon de choc 16 et d'une butée de suspension tournante 18 assurant l'interface entre les éléments précédents et la caisse du véhicule (non représentée).

La rotation de la butée 18 autour d'un axe 100 est assurée par un palier à roulement 20 comportant une rondelle supérieure métallique 22 et une rondelle inférieure métallique 24, de préférence réalisées par emboutissage d'une tôle, et définissant des chemins de roulement 26, 28 sur lesquels roulent des corps roulants 30, en l'espèce des billes. La rondelle inférieure 24 forme une portée annulaire plane inférieure d'appui 32 pour l'amortisseur télescopique 12, s'étendant radialement vers l'intérieur par rapport aux chemins de roulement 26, 28.

L'interface entre d'une part le roulement 20 et d'autre part le ressort à boudin 14 et le tampon de choc 16, est assuré par une coupelle d'appui monobloc 34 en matière plastique.

Cette coupelle présente sur sa face supérieure 36 une zone de contact 38 avec la rondelle inférieure 24 du roulement 20, composée de nervures 39, la rondelle inférieure 24 étant en appui sur les arêtes des nervures 39. Les nervures 39 peuvent être radiales comme illustré sur la figure 1, ou circulaires et concentriques. La face supérieure 36 de la coupelle 34 comporte en outre des nervures de renfort 40 situées radialement à l'extérieur de la zone de contact 38, s'étendant depuis cette dernière jusqu'à la périphérie extérieure de la coupelle 34. Les nervures 40 se croisent et délimitent ainsi des alvéoles polygonales 41.

La face inférieure 42 de la coupelle 34 présente à sa périphérie un épaulement annulaire plan extérieur 44 et une portée annulaire au moins partiellement cylindrique 46 tournée radialement vers l'extérieur délimitant avec l'épaulement extérieur 44 une zone annulaire périphérique d'appui 47 pour l'extrémité supérieure du ressort à boudin.

La coupelle 34 présente une cloison 49 formant un pli annulaire 48 qui constitue la portée annulaire 46 et entoure extérieurement une zone de logement 50 d'une extrémité supérieure du tampon de choc 16 formée par un épaulement annulaire plan 52 et par une face de confinement 54 au moins partiellement cylindrique tournée radialement vers l'intérieur. La face de confinement 54 de la zone de logement 50 de l'extrémité supérieure du tampon de choc 16 est située radialement à l'intérieur de la portée annulaire 46 de la zone d'appui de l'extrémité supérieure du ressort 14. La rondelle inférieure 24 a un diamètre extérieur inférieur au diamètre de la portée cylindrique 46 et de préférence inférieur au diamètre de la face de confinement 54. Des orifices d'évacuation 56 situés radialement à l'extérieur de la zone de contact 38 avec la rondelle inférieure 24, de préférence à la périphérie immédiate de cette zone, permettent le cas échéant une évacuation de liquide.

Un couvercle de protection 58 du palier à roulement 20 vient en appui sur la rondelle supérieure 22 et présente une jupe périphérique 60 formant un joint labyrinthe avec un relief périphérique ou des ergots 62 de la face supérieure 36 de la coupelle 34. La jupe périphérique 60 et le relief périphérique 62 présentent des zones d'encliquetage mutuel qui ne sont pas en prise après le montage de la butée sur le véhicule, mais permettent de constituer un sous-ensemble cohérent préassemblé entre le roulement 20 et la coupelle 34 avant le montage sur le véhicule.

La tige d'amortisseur 12 présente un épaulement en appui direct contre la portée d'appui inférieure 32 qui s'étend radialement vers l'intérieur par rapport à la zone d'appui 38 et de manière plus générale par rapport à la coupelle 34, de sorte que la tige d'amortisseur 12 n'a pas de contact avec la coupelle 34. La tige d'amortisseur présente en outre une extrémité filetée 64 qui traverse le palier à roulement 20. La fixation de la tige d'amortisseur 12 à la rondelle inférieure 24 est obtenue grâce à un écrou 66 vissé à l'extrémité filetée de la tige d'amortisseur 12 et venant pincer une entretoise 68 sur une portée d'appui supérieure 70 de la rondelle inférieure 24, opposée à la portée d'appui inférieure 32.

L'homme du métier appréciera que la coupelle 34 est conformée de manière à pouvoir à être réalisée par moulage par injection dans un moule à mouvement purement axial, parallèlement à l'axe de rotation 100 du roulement 20.

Diverses variantes sont envisagées. Le palier 20 peut être un palier lisse, la rondelle supérieure 22 et la rondelle inférieure 24 présentant des pistes de friction annulaires au contact l'une de l'autre, ou au contact d'une rondelle de friction intermédiaire interposée entre la rondelle supérieure 22 et la rondelle inférieure 24.

D'autres variantes sont naturellement possibles. Il est notamment possible de prévoir un insert, notamment un insert métallique, de renfort de la coupelle. On peut prévoir des nervures radiales se croisant avec des nervures en arc de cercle.

## Revendications

1. Butée de suspension (18) pour une jambe de suspension (10) comportant un amortisseur télescopique (12) et un ressort à boudin (14), la butée de suspension (18) comportant:
- un palier (20) comportant au moins une rondelle supérieure (22) et une rondelle inférieure (24) tournant l'une par rapport à l'autre autour d'un axe de rotation;
- une portée annulaire plane inférieure d'appui (32) pour l'amortisseur télescopique (12), solidaire de la rondelle inférieure; et
- une coupelle monobloc (34) présentant une face supérieure (36) comportant une zone de contact (38) en contact avec la rondelle inférieure (24) et une face inférieure (42) comportant un épaulement annulaire plan extérieur (44) et une portée annulaire au moins partiellement cylindrique (46) tournée radialement vers l'extérieur délimitant avec l'épaulement extérieur (44) une zone annulaire périphérique d'appui (47) pour l'extrémité supérieure du ressort à boudin (14),
**caractérisée en ce que**
- la rondelle inférieure (24) forme la portée annulaire plane inférieure d'appui (32), la portée annulaire plane inférieure d'appui (32) s'étendant radialement vers l'intérieur par rapport à la coupelle monobloc (34), et
- la face inférieure (42) de la coupelle monobloc comporte en outre une zone de logement (50) d'une extrémité supérieure d'un tampon de choc (16), délimitée au moins par un épaulement annulaire plan intérieur (52).

2. Butée selon la revendication 1, **caractérisée en ce que** la coupelle est en matière plastique ou en un matériau composite avec ou sans insert de renfort.

3. Butée selon l'une quelconque des revendications précédentes, **caractérisé en ce que** la face supérieure (36) de la coupelle monobloc (34) comporte des nervures de renfort (40) situées radialement à l'extérieur de la zone de contact.

4. Butée selon la revendication précédente, **caractérisée en ce que** certaines au moins des nervures (40) sont radiales.

5. Butée selon l'une quelconque des revendications 3 ou 4, **caractérisée en ce que** certaines au moins des nervures (40) délimitent des alvéoles polygonales (41).

6. Butée selon l'une quelconque des revendications précédentes, **caractérisée en ce que** la zone de contact (38) comporte des nervures (39).

7. Butée selon l'une quelconque des revendications précédentes, **caractérisée en ce que** la rondelle inférieure (24) a un diamètre extérieur inférieur à un diamètre intérieur de la zone annulaire périphérique d'appui (47) de l'extrémité supérieure du ressort à boudin (14).

8. Butée selon l'une quelconque des revendications précédentes, **caractérisée en ce que** la zone de logement (50) est en outre délimitée par une face de confinement (54) au moins partiellement cylindrique tournée radialement vers l'intérieur.

9. Butée selon la revendication précédente, **caractérisée en ce que** la zone de contact (38) est située radialement à l'intérieur de la face de confinement (54).

10. Butée selon la revendication précédente, **caractérisée en ce que** la coupelle monobloc (34) présente une cloison (49) formant un pli annulaire (48) constituant la face de confinement (54) et la portée annulaire (46).

11. Butée selon l'une quelconque des revendications précédentes, **caractérisée en ce qu'**elle comporte en outre un couvercle (58) en appui sur la rondelle supérieure (22).

12. Butée selon l'une quelconque des revendications précédentes, **caractérisée en ce que**, la portée annulaire plane inférieure d'appui (32) s'étend radialement vers l'intérieur par rapport à la rondelle supérieure (24).

13. Butée selon l'une quelconque des revendications précédentes, **caractérisée en ce que** le palier (20) est un palier à roulement, comportant des corps roulants (30) en contact avec des chemins de roulement (26, 28) formés sur les rondelles supérieure et inférieure (22, 24).

14. Butée selon l'une quelconque des revendications 1 à 12, **caractérisée en ce que** le palier (20) est un palier lisse, avec ou sans interposition d'une rondelle de friction entre la rondelle supérieure (22) et la rondelle inférieure (24).

15. Jambe de suspension (10) comportant une butée de suspension (18) selon l'une quelconque des revendications précédentes, un amortisseur télescopique (12) traversant la butée de suspension (18) sans contact avec la coupelle monobloc (34) et en appui contre la portée annulaire plane inférieure d'appui (32) formée par la rondelle inférieure (24), un ressort à boudin (14) entourant l'amortisseur télescopique (12) et présentant une extrémité supérieure en appui contre la zone d'appui (47) et un tampon de choc (16) présentant une extrémité supérieure logée dans la zone de logement (50).

## Patentansprüche

1. Aufhängungslager (18) für ein Federbein (10) mit teleskopischem Stoßdämpfer (12) und Spiralfeder (14), wobei das Aufhängungslager (18) Folgendes umfasst:
- ein Lager (20), welches zumindest eine obere Scheibe (22) und eine untere Scheibe (24) umfasst, die sich um eine Rotationsachse gegeneinander drehen;
- eine ringförmige ebene untere Anlagefläche (32) für den teleskopischen Stoßdämpfer (12), die mit der unteren Scheibe fest verbunden ist; und
- einen Monoblock-Teller (34) mit einer Oberseite (36), welche einen Kontaktbereich (38) zur unteren Scheibe (24) umfasst, und einer Unterseite (42) mit einem ringförmigen ebenen äußeren Ansatz (44) und einer zumindest teilweise zylindrischen (46) ringförmigen, radial nach außen gedrehten Auflage, die mit dem äußeren Ansatz (44) für das obere Ende der Spiralfeder einen umlaufenden ringförmigen Auflagebereich (47) abgrenzt, **dadurch gekennzeichnet, dass**
- die untere Scheibe (24) die ringförmige ebene untere Anlagefläche (32) bildet, wobei sich die ringförmige ebene untere Anlagefläche (32) in Bezug auf den Monoblock-Teller (34) radial nach innen erstreckt, und
- die Unterseite (42) des Monoblock-Tellers des Weiteren einen Aufnahmebereich (50) für ein oberes Ende eines Stoßdämpfungspuffers (16) umfasst, der zumindest durch einen ringförmigen ebenen unteren Ansatz (52) abgegrenzt wird.

2. Aufhängungslager nach Anspruch 1, **dadurch gekennzeichnet, dass** der Teller aus Kunststoff oder einem Verbundmaterial mit oder ohne Verstärkungseinsatz besteht.

3. Aufhängungslager nach einem der vorhergehenden Ansprüche, **dadurch gekennzeichnet, dass** die Oberseite (36) des Monoblock-Tellers (34) Verstärkungsrippen (40) umfasst, die sich radial an der Außenseite des Kontaktbereichs befinden.

4. Aufhängungslager nach dem vorhergehenden Anspruch, **dadurch gekennzeichnet, dass** zumindest einige der Rippen (40) radial sind.

5. Aufhängungslager nach einem der Ansprüche 3 oder 4, **dadurch gekennzeichnet, dass** zumindest einige der Rippen (40) mehreckige Vertiefungen (41) begrenzen.

6. Aufhängungslager nach einem der vorhergehenden Ansprüche, **dadurch gekennzeichnet, dass** der Kontaktbereich (38) Rippen (39) umfasst.

7. Aufhängungslager nach einem der vorhergehenden Ansprüche, **dadurch gekennzeichnet, dass** die untere Scheibe (24) einen Außendurchmesser hat, der kleiner als der Innendurchmesser des umlaufenden ringförmigen Auflagebereichs (47) des oberen Endes der Spiralfeder (14) ist.

8. Aufhängungslager nach einem der vorhergehenden Ansprüche, **dadurch gekennzeichnet, dass** der Aufnahmebereich (50) des Weiteren durch eine zumindest teilweise zylindrische Grenzfläche (54) begrenzt wird, die radial nach innen gedreht ist.

9. Aufhängungslager nach dem vorhergehenden Anspruch, **dadurch gekennzeichnet, dass** sich der Kontaktbereich (38) radial im Innern der Grenzfläche (54) befindet.

10. Aufhängungslager nach dem vorhergehenden Anspruch, **dadurch gekennzeichnet, dass** der Monoblock-Teller (34) eine Trennwand (49) aufweist, die einen ringförmigen Falz (48) bildet, welcher die Grenzfläche (54) und die ringförmige Auflagefläche (46) bildet.

11. Aufhängungslager nach einem der vorhergehenden Ansprüche, **dadurch gekennzeichnet, dass** es des Weiteren einen Deckel (58) umfasst, der an der oberen Scheibe (22) anliegt.

12. Aufhängungslager nach einem der vorhergehenden Ansprüche, **dadurch gekennzeichnet, dass** sich die ringförmige ebene untere Anlagefläche (32) in Bezug auf die obere Scheibe (24) radial nach innen erstreckt

13. Aufhängungslager nach einem der vorhergehenden Ansprüche, **dadurch gekennzeichnet, dass** das Lager (20) ein Wälzlager mit Rollkörpern (30) ist, die mit den Laufbahnen (26, 28), welche auf der oberen und unteren Scheibe (22, 24) gebildet werden, in Kontakt sind.

14. Aufhängungslager nach einem der Ansprüche 1 bis 12, **dadurch gekennzeichnet, dass** das Lager (20) ein Gleitlager ist und zwischen der oberen Scheibe (22) und der unteren Scheibe (24) eine Gleitscheibe eingesetzt ist oder nicht.

15. Federbein (10), welches ein Aufhängungslager (18) nach einem der vorhergehenden Ansprüche umfasst, einen teleskopischen Stoßdämpfer (12), der durch das Aufhängungslager (18) führt, ohne den Monoblock-Teller (34) zu berühren, und an der ringförmigen ebenen unteren Anlagefläche (32), welche durch die untere Scheibe (24) gebildet wird, anliegt, eine Spiralfeder (14), welche den teleskopischen Stoßdämpfer (12) umschließt und ein oberes Ende aufweist, das am Auflagebereich (47) anliegt, und ein Stoßdämpferpuffer (16), der ein oberes Ende aufweist, das im Aufnahmebereich (50) sitzt.

## Claims

1. Suspension stop (18) for a suspension strut (10) comprising a telescopic shock absorber (12) and a coil spring (14), wherein the suspension stop (18) comprises:
- a bearing (20) comprising at least one top washer (22) and a bottom washer (24) rotating in relation to each other around an axis of rotation;
- a bottom flat annular bearing seat (32) for the telescopic shock absorber (12), integral with the bottom washer; and
- a one-piece cup (34) having an upper face (36) comprising a contact area (38) in contact with the bottom washer (24) and a lower face (42) comprising an outer flat annular shoulder (44) and an at least partially cylindrical annular seat (46) turned radially outwards, delimiting with the outer shoulder (44) a peripheral annular bearing area (47) for the top end of the coil spring (14),
**characterised in that**
- the bottom washer (24) forms the bottom flat annular bearing seat (32), with the bottom flat annular bearing seat (32) extending radially inwards in relation to the single-piece cup (34), and
- the lower face (42) of the single-piece cup furthermore comprises a recess area (50) for a top end of a shock-absorber buffer (16), delimited at least by an inner flat annular shoulder (52).

2. Buffer according to claim 1, **characterised in that** the cup is made of plastic material or composite material with or without a reinforcement insert.

3. Buffer according to any one of the preceding claims, **characterised in that** the upper face (36) of the single-piece cup (34) comprises reinforcement ribs (40) situated radially outside the contact area.

4. Buffer according to the preceding claim, **characterised in that** some at least of the ribs (40) are radial.

5. Buffer according to either of claims 3 or 4, **characterised in that** some at least of the ribs (40) delimit polygonal cavities (41).

6. Buffer according to any one of the preceding claims, **characterised in that** the contact area (38) comprises ribs (39).

7. Buffer according to any one of the preceding claims, **characterised in that** the external diameter of the bottom washer (24) is smaller than the internal diameter of the peripheral annular bearing area (47) of the top end of the coil spring (14).

8. Buffer according to any one of the preceding claims, **characterised in that** the recess area (50) is furthermore delimited by an at least partially cylindrical confinement face (54) turned radially inwards.

9. Buffer according to the preceding claim, **characterised in that** the contact area (38) is located radially inside the confinement face (54).

10. Buffer according to the preceding claim, **characterised in that** the single-piece cup (34) has a partition wall (49) forming an annular fold (48) constituting the confinement face (54) and the annular seat (46).

11. Buffer according to any one of the preceding claims, **characterised in that** it furthermore comprises a cover (58) resting on the top washer (22).

12. Buffer according to any one of the preceding claims, **characterised in that** the bottom flat annular bearing seat (32) extends radially inwards in relation to the top washer (24).

13. Buffer according to any one of the preceding claims, **characterised in that** the bearing (20) is a ball bearing, comprising rolling bodies (30) in contact with bearing races (26, 28) formed on the top and bottom washers (22, 24).

14. Buffer according to any one of claims 1 to 12, **characterised in that** the bearing (20) is a smooth bearing, with or without interposition of a friction ring between the top washer (22) and the bottom washer (24) .

15. Suspension strut (10) comprising a suspension stop (18) according to any one of the preceding claims, a telescopic shock absorber (12) passing through the suspension stop (18) without contact with the single-piece cup (34) and resting against the bottom flat annular bearing seat (32) formed by the bottom washer (24), a coil spring (14) surrounding the telescopic shock absorber (12) and having a top end resting against the bearing area (47) and a shock-absorber buffer (16) having a top end accommodated in the recess area (50).
